# FASCICULE DE BREVET EUROPEEN

(11) **EP 1 335 789 B1**
(45) Date de publication et mention de la délivrance du brevet: **23.01.2008**
(21) Numéro de dépôt: 01978548.4
(22) Date de dépôt: 17.10.2001
(51) Int. Cl.: B01D 53/34, B01D 53/58, B01D 53/52

(54) **PROCEDE D'OXYDATION PARTIELLE D'UN FLUX DE GAZ COMPRENANT DU SULFURE D'HYDROGENE ET DE L'AMMONIAC**
VERFAHREN ZUR TEILOXIDATION EINES SCHWEFELWASSERSTOFF UND AMMONIAK ENTHALTENDEN GASSTROMS
METHOD FOR PARTIALLY OXIDISING A GAS STREAM COMPRISING HYDROGEN SULPHIDE AND AMMONIA

(30) Priorité: 17.10.2000 FR 0013277
(43) Date de publication de la demande: 20.08.2003
(73) Titulaire: L'AIR LIQUIDE, Société Anonyme pour l'Etude et l'Exploitation des Procédés Georges Claude, 75007 Paris (FR)
(72) Inventeur: TSIAVA, Rémi, Pierre, F-91250 St. Germain lès Corbeil (FR); BINOIST, Manuel, F-75020 Paris (FR); GRAND, Benoît, F-78000 Versailles (FR); SOULA, Richard, FR-78210 St. Cyr l'Ecole (FR); CIEUTAT, Denis, F-92200 Neuilly Sur Seine (FR); CHAMPINOT, Christel, F-92100 Boulogne Billancourt (FR)
(74) Mandataire: Ducreux, Marie
(86) Numéro de dépôt international: PCT/FR2001/003206
(87) Numéro de publication internationale: WO 2002/032551

(56) Documents cités:
- EP-A- 0 325 286
- EP-A- 0 810 974
- US-A- 4 394 119
- US-A- 5 904 910

## Description

La présente invention concerne un procédé d'oxydation partielle, dans un four Claus, d'un flux de gaz comprenant du sulfure d'hydrogène et de l'ammoniac par réaction avec un flux d'un gaz riche en oxygène.

Des flux gazeux riches en sulfure d'hydrogène sont des déchets produits par de nombreuses industries, notamment l'industrie du raffinage du pétrole et de la production de gaz naturel. Pour des raisons liées notamment à l'environnement, ces gaz riches en sulfure d'hydrogène ne peuvent être libérés tels quels dans l'atmosphère. Il est donc nécessaire de les traiter en vue de réduire notablement leur teneur en sulfure d'hydrogène. Un procédé bien connu pour traiter ces gaz riches en sulfure d'hydrogène est le procédé Claus modifié communément appelé Claus.

Ce procédé comprend une partie thermique et une partie catalytique. Dans la partie thermique sont réalisés deux réactions principales. La première réaction consiste à faire réagir une partie du sulfure d'hydrogène avec de l'oxygène pour produire de l'eau et du dioxyde de soufre de la manière suivante :

H₂S + 3/2 O₂ ⇒ H₂O + SO₂ (i)

Par cette première réaction, on procède à l'oxydation d'environ 1/3 du sulfure d'hydrogène à traiter. Les 2/3 restants sont mis à réagir avec le dioxyde de soufre formé au cours de la première étape ci-dessus, selon la réaction suivante, dite réaction de Claus :

2 H₂S + SO₂ ⇔ ³/₂ S₂+ 2 H₂O (ii)

Les produits de combustion sont ensuite refroidis dans une chaudière de récupération de chaleur puis dans un premier condenseur dans lequel le soufre élémentaire est récupéré sous forme liquide. Les gaz sont ensuite réchauffés à une température permettant leur traitement sur un ou plusieurs lits catalytiques (chacun de ces lits étant suivi d'un condenseur). Sur les lits catalytiques, la réaction de Claus se poursuit jusqu'à l'obtention d'un taux de conversion en sulfure d'hydrogène compatible avec les normes de rejet en dioxyde de soufre provenant de l'ultime étape du procédé qui est l'incinération de l'H₂S résiduel. Dans le cas où le deux ou trois lits catalytiques ne permettent pas d'atteindre les normes de rejet en dioxyde de soufre, une unité de traitement de gaz de queue peut être ajoutée avant envoi des gaz résiduaires à l'incinérateur final.

Les flux gazeux riches en sulfure d'hydrogène traités en raffinerie peuvent parfois contenir de l'ammoniac en plus du sulfure d'hydrogène. C'est le cas, par exemple, des gaz résiduaires issus des strippeurs d'eaux acides dans lesquels les condensats de procédés (par exemple, étape d'hydrocraquage ou de craquage catalytique en particulier pour des charges lourdes) sont strippés à la vapeur afin de récupérer le sulfure d'hydrogène et l'ammoniac. Ces gaz sont typiquement composés d'un tiers de sulfure d'hydrogène, d'un tiers d'ammoniac et d'un tiers de vapeur d'eau.

Lors du traitement de ces flux gazeux selon le procédé Claus, la destruction de l'ammoniac doit y être la plus complète possible sous peine de problèmes opérationnels sévères dans l'unité Claus. En effet, en aval de la chaudière de récupération de chaleur, des dépôts de sels ammoniaqués dans les lignes froides ou en sortie des condenseurs peuvent entraîner des bouchages, une dégradation des performances de l'unité et au final une augmentation des émissions en dioxyde de soufre. Lors de la mise en oeuvre du procédé Claus, la destruction de l'ammoniac peut être obtenue par différentes réactions chimiques (oxydation, dissociation thermique) qui ont lieu simultanément à la première réaction (i) du procédé Claus.

Il est reconnu que la destruction de l'ammoniac présent dans les gaz contenant du sulfure d'hydrogène est favorisée par une haute température. Cette destruction peut être mise en oeuvre avec des procédés d'oxydation Claus ne mettant en oeuvre que de l'air ou des procédés mettant en oeuvre à la fois de l'air et de l'oxygène.

Dans les procédés d'oxydation ne mettant en oeuvre que de l'air, le traitement des gaz contenant du sulfure d'hydrogène et de l'ammoniac peut se faire :
- soit par utilisation d'un four à deux zones avec by-pass d'une partie ou de la totalité des gaz ne contenant pas d'ammoniac. Cette solution permet d'augmenter la température de la première zone dans laquelle la totalité du gaz contenant l'ammoniac est oxydé. Son inconvénient est qu'elle peut entraîner une mauvaise destruction des contaminants du type hydrocarbures ou amines présents dans le gaz ne contenant pas d'ammoniac et créer d'autres problèmes que le dépôt de sels ammoniaqués (par exemple : cokage des catalyseurs en aval),
- soit par utilisation du gaz combustible de raffinerie (dit "fuel gas" en anglais) pour augmenter la température dans le four de réaction. Le principal inconvénient de cette mise en oeuvre est l'augmentation de la quantité de gaz passant au travers de l'unité, ceci pouvant mener à un goulot d'étranglement. De plus, l'introduction de gaz combustible de raffinerie dans le four Claus a tendance à augmenter les teneurs en CS₂, et en COS dans le cas où le gaz combustible contient beaucoup de CO₂, dans les gaz issus du four Claus, ce qui entraîne à une baisse des performances des lits catalytiques en aval du four.

Dans les procédés d'oxydation mettant en oeuvre à la fois de l'air et de l'oxygène, c'est-à-dire où l'air de combustion est remplacé par un mélange d'air et d'oxygène, il est possible d'obtenir un meilleur traitement des gaz contenant du sulfure d'hydrogène et de l'ammoniac car l'enrichissement de l'air de combustion par de l'oxygène augmente la température dans le four de réaction et améliore ainsi la destruction de l'ammoniac. Mais, dans ce cas, on augmente non seulement la température des gaz contenant de l'ammoniac, mais également celle des gaz ne contenant pas d'ammoniac ; la quantité d'oxygène utilisée n'est donc pas optimisée. En outre, les caractéristiques métallurgiques de la ligne d'amenée d'air et du brûleur associées à la présence potentielle de graisse et de poussières dans l'air introduit ne sont en général pas compatibles avec des degrés d'enrichissement en oxygène supérieurs à 28%.

Pour résoudre le problème de l'utilisation de l'oxygène spécifiquement pour augmenter la température du gaz comprenant de l'ammoniac, il a été proposé des brûleurs spécifiques permettant une alimentation séparée :
- de l'air,
- de l'oxygène pur ou de l'air enrichi en oxygène,
- des gaz contenant de l'ammoniac,
- des gaz ne contenant pas d'ammoniac.

Par utilisation de ces brûleurs Claus spécifiques permettant un confinement séparés des flux des différents gaz, il a été possible d'obtenir à l'intérieur de la flamme des zones plus ou moins chaudes. Ceci autorise des élévations de température localisées dédiées à la destruction de l'ammoniac et permet de garder simultanément une température plus "froide" pour l'oxydation des autres gaz et au contact des réfractaires du four. Ce type de brûleur est décrit par exemple dans les demandes EP-A1-0 810 974 et EP-A1-0 974 552. Ces brûleurs permettent une destruction de l'ammoniac dans la mesure où la quantité d'oxygène injectée est suffisante.

Quel que soit le mode d'injection de l'oxygène dans le four Claus, la quantité d'oxygène à injecter est généralement indexée en termes de composition et de débit sur un gaz ammoniaqué de référence. Or, selon les conditions de fonctionnement des unités de raffinage situées en amont de l'unité Claus (type de charges et sévérité de l'hydrocraqueur ou de l'unité de craquage catalytique par exemple), la teneur en ammoniac des gaz à traiter peut varier fortement de manière temporaire ou non par rapport à la teneur du gaz ammoniaqué de référence. Par exemple, pour un site de raffinage comportant un hydrocraqueur, selon que cet hydrocraqueur est en fonctionnement ou non, la teneur en ammoniac du gaz à traiter peut varier entre 15 et 35 %. La quantité d'oxygène à injecter pour détruire totalement l'ammoniac est alors différente. De plus, si le procédé prévoit le traitement simultané d'un gaz contenant du sulfure d'hydrogène et pas d'ammoniac, dit gaz acide, et si ce gaz varie en quantité ou en qualité (teneur en sulfure d'hydrogène ou teneur en hydrocarbures par exemple), les conditions opératoires dans le four de l'unité Claus doivent être modifiées et influent sur la quantité d'oxygène nécessaire pour détruire totalement l'ammoniac.

Un but de la présente invention est de proposer un procédé d'oxydation dans un four Claus permettant une destruction complète de l'ammoniac.

Un autre but est de proposer un procédé d'oxydation dans un four Claus permettant une destruction complète de l'ammoniac avec optimisation de la consommation en oxygène quelles que soit les quantité et qualité des gaz sulfurés contenant de l'ammoniac.

Un autre but est de proposer un procédé d'oxydation dans un four Claus permettant une destruction complète de l'ammoniac avec optimisation de la consommation en oxygène quelles que soit les quantités et qualités des gaz sulfurés contenant de l'ammoniac ou des gaz sulfurés ne contenant pas d'ammoniac.

Le procédé selon l'invention présente l'avantage de pouvoir être mis en oeuvre sur des unités existantes sans modification importante de l'installation Claus.

Dans ces buts, l'invention concerne un procédé d'oxydation partielle dans un four Claus d'au moins un flux de gaz comprenant du sulfure d'hydrogène et de l'ammoniac, dit gaz ammoniaqué, à l'aide d'un flux de gaz riche en oxygène dans lequel :
- on mesure la teneur résiduelle en ammoniac à la sortie du four Claus,
- on compare cette valeur à la teneur résiduelle en ammoniac désirée,
- et éventuellement on modifie le rapport du débit du gaz riche en oxygène sur le débit du gaz ammoniaqué de manière à obtenir la teneur résiduelle en ammoniac désirée.

D'autres caractéristiques et avantages de l'invention apparaîtront à la lecture de la description qui va suivre. Des formes et des modes de réalisation de l'invention sont donnés à titre d'exemples non limitatifs, illustrés par les dessins joints dans lesquels :
- la figure 1 est une vue générale du procédé selon l'invention,
- les figures 2 à 5 représentent différentes variantes de mise en oeuvre du procédé selon l'invention.

Selon la caractéristique essentielle de l'invention, on mesure la teneur résiduelle en ammoniac en aval du four Claus, on compare cette valeur à la teneur résiduelle en ammoniac désirée, et éventuellement on modifie le rapport du débit du gaz riche en oxygène sur le débit du gaz ammoniaqué de manière à obtenir la teneur résiduelle en ammoniac désirée. La teneur résiduelle en ammoniac désirée en aval du four est fixée par l'utilisateur de l'unité Claus et répond généralement à la valeur maximale admissible pour la bonne marche du procédé Claus, habituellement inférieure à 150 ppmv. Si la valeur de la teneur résiduelle en ammoniac à la sortie du four Claus est supérieure à la teneur résiduelle en ammoniac désirée, le rapport du débit du gaz riche en oxygène sur le débit du gaz ammoniaqué est augmenté. Ainsi, ce procédé assure une destruction de l'ammoniac jusqu'aux teneurs désirées. Ce procédé permet également une consommation optimisée du gaz riche en oxygène. En effet, le contrôle de la teneur résiduelle en ammoniac à la sortie du four Claus permet également de modifier le rapport du débit du gaz riche en oxygène sur le débit du gaz ammoniaqué de manière à obtenir la teneur résiduelle en ammoniac désirée pour un débit en gaz riche en oxygène minimum. Ainsi, si on constate que la teneur résiduelle en ammoniac à la sortie du four est toujours inférieure à la valeur de la teneur résiduelle en ammoniac désirée, la consommation en gaz riche en oxygène peut être diminuée.

La mesure de la teneur résiduelle en ammoniac à la sortie du four Claus se fait par analyse des gaz sortant du four. Cette mesure peut se faire:
- dans les gaz directement issus du four,
- dans les gaz directement issus de la chaudière de récupération de chaleur placée à la sortie du four,
- dans les gaz directement issus des condenseurs de soufre placés à la sortie du four.

De préférence, la teneur résiduelle en ammoniac est mesurée en continu.

Selon le mode préféré de l'invention, la teneur résiduelle en ammoniac à la sortie du four Claus est mesurée par une diode laser. Le principe de la diode laser consiste à mesurer l'absorption d'une partie d'un rayonnement laser émis à une longueur d'onde appropriée par le gaz dont on cherche à mesurer la concentration. Dans la présente invention, on entend par diode laser, l'appareil de mesure se composant de l'émetteur du rayonnement laser et du récepteur du rayonnement après sa traversée du milieu à analyser et d'une unité électronique comparant le rayonnement émis et le rayonnement reçu. Dans le cadre de la présente invention, la diode laser est réglée pour mesurer l'absorption de la longueur d'onde 1500 nm correspondant à la présence d'ammoniac dans le milieu traversé par le rayonnement laser. Tout type de diode laser permettant de mesurer l'absorption de la longueur d'onde 1500 nm peut être utilisée dans le cadre de la présente invention. Selon l'emplacement de la diode laser dans l'unité Claus, on utilise une diode laser permettant de mesurer la concentration de gaz présentant une température supérieure à 100°C.

La diode laser peut être installée dans l'unité Claus selon différentes variantes. Selon une première variante, la diode laser est placée sur la conduite principale du procédé en aval du four Claus. Ainsi, le chemin optique suivi par le rayonnement laser traverse la conduite principale du procédé. Selon cette variante, la paroi de la conduite est percée de deux fenêtres de visée se faisant face. L'émetteur et le récepteur laser peuvent être positionnés derrière chacune de ces fenêtres de visée, ou l'émetteur et le récepteur peuvent être placés derrière la même fenêtre de visée et un miroir est alors placé derrière la seconde fenêtre de visée de manière à réfléchir le rayon laser émis par l'émetteur vers le récepteur. Un gaz, par exemple de l'azote, peut être utilisé pour nettoyer la surface des fenêtres de visée de l'émetteur et du récepteur de la diode laser afin d'éviter le dépôt de soufre vapeur et également pour prévenir un échauffement trop important de l'émetteur et du récepteur.

Selon une deuxième variante, la diode laser est placée sur une conduite de prélèvement de gaz du procédé en aval du four Claus. Ainsi, le chemin optique suivi par le rayonnement laser traverse une conduite secondaire de prélèvement de gaz placée en dérivation de la conduite principale du procédé. La diode laser peut alors être mise en oeuvre de la même manière que sur la conduite principale à travers deux fenêtres de visée percées dans la paroi de la conduite secondaire. La mesure peut être réalisée grâce à une cellule de mesure dans laquelle débouche la conduite secondaire. Si la conduite secondaire présente une portion rectiligne, il est également possible de placer l'émetteur et le récepteur de la diode laser à chaque extrémité de cette portion rectiligne. Il est généralement préférable que la conduite secondaire soit chauffée sur toute sa longueur à une température supérieure à la température du point de rosée du soufre vapeur pour éviter les dépôts de soufre sur les parois de la cellule de mesure. Dans le cas où une purge de l'émetteur et du récepteur de la diode laser est mise en place, cette purge doit être quantifiée de manière à éviter une dilution trop importante du gaz à analyser par le gaz de purge. Après analyse par la diode laser, les gaz de la conduite secondaire de prélèvement peuvent être réinjectés dans la conduite principale du procédé ou rejetés dans l'atmosphère. Dans le cas où les gaz sont réinjectés, un éjecteur de gaz (par exemple azote ou vapeur d'eau) peut être placé en aval de la cellule de mesure afin de faciliter l'écoulement des gaz dans la conduite secondaire de prélèvement. Lorsque les gaz sont rejetés dans l'atmosphère, les composés toxiques qui y sont contenus sont de préférence auparavant éliminés par un module de traitement physique (lit adsorbant) ou chimique (capacités réactionnelles liquides) placé au bout de la conduite secondaire de prélèvement.

Dans la conduite secondaire et en amont de la diode laser, on peut placer en travers de la conduite une cartouche remplie de laine de verre afin de piéger les vapeurs de soufre. Cette cartouche peut permettre d'éliminer les purges au niveau des émetteurs et récepteurs de la diode laser. Afin de garantir un fonctionnement en continu, deux cartouches peuvent être placées en parallèle.

En fonction de la valeur de la teneur résiduelle en ammoniac dans les gaz à la sortie du four Claus, on peut modifier manuellement le rapport du débit du gaz riche en oxygène sur le débit du gaz ammoniaqué, notamment lorsqu'il y a des modifications importantes et durables des quantités et/ou qualités du gaz ammoniaqué traité dans l'unité. Toutefois, cette modification est plutôt réalisée de manière automatique. Ainsi, le rapport du débit du gaz riche en oxygène sur le débit du gaz ammoniaqué est généralement modifié par une boucle de régulation placée entre l'appareil de mesure de la teneur résiduelle en ammoniac et un automate pilotant le régulateur de débit du gaz riche en oxygène. L'automate est contrôlé par un calculateur qui reçoit la mesure de la teneur résiduelle en ammoniac, la compare à la valeur désirée et éventuellement modifie le rapport des débits en ouvrant ou fermant la vanne pilotée par le régulateur de débit. Le calculateur est également généralement relié à :
- un appareil de mesure du débit du gaz ammoniaqué entrant dans le four,
- des instructions à respecter concernant la fourchette de valeurs du rapport de débits des gaz: débit du gaz riche en oxygène/débit du gaz ammoniaqué,

Selon un mode préféré, le flux de gaz riche en oxygène peut être relié à deux sources de gaz riche en oxygène : une source primaire et une source secondaire. Le débit du flux de gaz riche en oxygène est alors contrôlé par l'alimentation en gaz fournie par ces deux sources. Le débit de gaz riche en oxygène issu de la source primaire est de préférence contrôlé par le calculateur en fonction du signal qu'il reçoit de la mesure du débit du gaz ammoniaqué entrant dans le four (signal en action direct dit "feedforward" en anglais), tandis que le débit de gaz riche en oxygène issu de la source secondaire est de préférence contrôlé par le calculateur en fonction du signal qu'il reçoit de la mesure de la teneur résiduelle en ammoniac à la sortie du four (signal retour dit "feedback" en anglais). La source secondaire permet donc de répondre aux fluctuations de débit et de concentration en ammoniaque du gaz ammoniaqué.

Le procédé selon l'invention s'applique à tout type de gaz ammoniaqué. Généralement, la concentration en sulfure d'hydrogène dans le flux de gaz ammoniaqué est comprise entre 10 et 90 % molaire ; la concentration en ammoniac dans ce flux de gaz est elle généralement d'au moins 5 % molaire, de préférence comprise entre 10 et 60 % molaire. Ce gaz peut également comprendre 10 à 60 % molaire de vapeur d'eau.

Dans le procédé selon l'invention, le gaz riche en oxygène peut être de l'air ou de l'air enrichi en oxygène, de préférence enrichi en une teneur supérieure à 25 % molaire, encore plus préférentiellement en une teneur comprise entre 40 et 100 % molaire, le gaz enrichi à 100 % en oxygène correspondant à de l'oxygène pur. La teneur en oxygène en laquelle ledit gaz est enrichi en oxygène, correspond à la fraction molaire en oxygène dudit gaz enrichi. A titre d'exemple, de l'air enrichi en oxygène à 50 %, consiste en un mélange gazeux comprenant 50 % molaire d'oxygène.

On peut également introduire dans le four Claus un second gaz comprenant de l'oxygène, dit gaz moins riche en oxygène, qui présente une teneur en oxygène inférieure à celle du gaz riche en oxygène précédemment décrit. Généralement, la gaz moins riche en oxygène est de l'air.

Selon le procédé de l'invention, un flux de gaz comprenant du sulfure d'hydrogène et pas d'ammoniac, dit gaz acide, peut aussi être injecté dans le four. Par gaz ne comprenant pas d'ammoniac, on entend un gaz dont la concentration molaire en ammoniac est inférieure à 5 % (< 5 %). La concentration en sulfure d'hydrogène dans ce flux de gaz peut, elle, être d'au moins 10 % molaire, plus généralement comprise entre 60 et 95 % molaire. Le flux de gaz acide est essentiellement constitué de sulfure d'hydrogène et peut également comprendre au moins un des composés suivants : vapeur d'eau, gaz carbonique, hydrocarbures et autres composés sulfurés.

Selon une première variante de mise en oeuvre de l'invention, on peut mélanger les gaz avant de les injecter dans le four Claus. Ainsi, le gaz ammoniaqué et le gaz acide peuvent être mélangés puis injectés dans le four Claus par une même conduite. De même, le gaz riche en oxygène et le gaz moins riche en oxygène sont généralement préalablement mélangés dans une même conduite en amont du brûleur, puis injectés mélangés dans le four Claus. Cette mise en oeuvre est communément appelée enrichissement par prémélange (ou "premix" en anglais).

Selon une deuxième variante de mise en oeuvre de l'invention, les gaz sont injectés dans le four Claus par des conduits séparés. Selon cette deuxième variante, les vecteurs vitesse d'injection dans le four des différents gaz sont généralement sensiblement parallèles, ce qui signifie, dans le cadre de la présente invention, que l'angle formé par les vecteurs vitesse de chacun des gaz, pris au débouché immédiat des brûleurs, est inférieur à environ 15°. Selon cette deuxième variante du procédé de l'invention, le flux du gaz riche en oxygène peut être entouré par un flux de gaz moins riche en oxygène. Préférentiellement, ces deux flux sont les suivants : le gaz fortement riche en oxygène est de l'oxygène pur, et le gaz moins riche en oxygène est de l'air. Selon cette deuxième variante, le flux de gaz ammoniaqué et le flux de gaz riche en oxygène sont habituellement injectés dans le four de manière telle que lesdits flux entrent en contact et autorisent la réaction d'oxydation partielle du sulfure d'hydrogène avec l'oxygène ainsi que les réactions d'oxydation et de dissociation thermique de l'ammoniac. A cette fin, lesdits flux sont injectés à proximité l'un de l'autre et, de préférence, on procède de sorte à ce que le flux de gaz riche en oxygène entoure le flux de gaz ammoniaqué. De manière particulièrement préférée, au moins une partie du flux de gaz ammoniaqué est entourée par une partie au moins du flux de gaz riche en oxygène. Lorsqu'un flux de gaz acide est injecté dans le four, alors il est préférable que ce flux entoure le ou les flux de gaz comprenant de l'oxygène. Selon cette deuxième variante, les différents flux injectés peuvent être coaxiaux, ainsi ces flux peuvent être injectés au moyen d'un brûleur comprenant des tubes concentriques. L'injection de ces différents flux peut être réalisée au moyen d'un brûleur multi-tubes, où le tube central permet l'injection du gaz ammoniaqué, le premier tube intermédiaire entourant le tube central permet l'injection d'un flux de gaz riche en oxygène, le second tube intermédiaire entourant le premier tube intermédiaire permet l'injection du flux d'air moins riche en oxygène et le tube extérieur permet l'injection d'un flux de gaz acide.

Le procédé selon l'invention est généralement mis en oeuvre dans un four Claus conventionnel.

Si le procédé prévoit l'injection d'un gaz ammoniaqué, d'un gaz acide et de deux flux de gaz comprenant de l'oxygène en teneurs différentes en oxygène, alors la mise en oeuvre de deux sources (primaire et secondaire) pour chacun des deux flux de gaz riches en oxygène peut être appliquée. Dans ce cas, le procédé est mis en oeuvre de la manière suivante :
- le débit de gaz riche en oxygène issu de la source primaire est contrôlé par le calculateur en fonction du signal que ledit calculateur reçoit de la mesure du débit du gaz ammoniaqué entrant dans le four (signal 'feedforward") et le débit de gaz riche en oxygène issu de la source secondaire est contrôlé par le calculateur en fonction du signal que ce dernier reçoit de la mesure de la teneur résiduelle en ammoniac à la sortie du four (signal "feedback"), ainsi que précédemment défini,
- le débit de gaz moins riche en oxygène issu de la source primaire est contrôlé par le calculateur en fonction du signal que ledit calculateur reçoit de la mesure du débit du gaz acide entrant dans le four (signal "feedforward"), et le débit de gaz moins riche en oxygène issu de la source secondaire est contrôlé par le calculateur en fonction du signal que ce dernier reçoit de la mesure du ratio molaire H₂S/SO₂ réalisée sur le gaz de queue, c'est-à-dire avant l'incinérateur de l'unité Claus (signal "feedback"). Un chromatographe gazeux en ligne ou un spectromètre ultraviolet peuvent être par exemple employés pour l'analyse du gaz de queue.

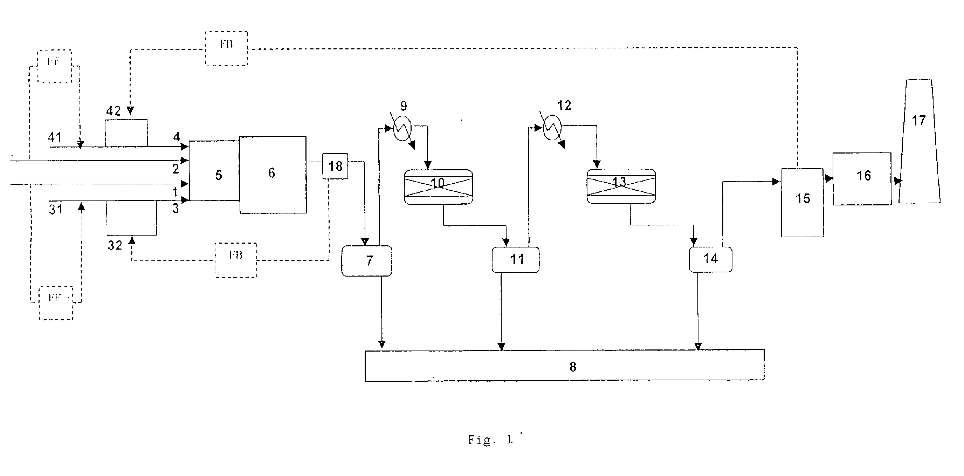

La figure 1 illustre le procédé selon l'invention dans le cas où les normes de rejet en dioxyde de soufre peuvent être satisfaites sans l'ajout d'une unité de traitement de gaz de queue .

Le gaz comprenant du sulfure d'hydrogène et de l'ammoniac (1) et le gaz comprenant du sulfure d'hydrogène et pas d'ammoniac (2) sont introduits dans le four (5) avec un gaz fortement riche en oxygène (3) et un gaz moins riche en oxygène (4).

A la sortie du four (5), les gaz passent dans une chaudière (6), puis dans un condenseur à soufre (7). Le soufre produit dans le condenseur (7) est récupéré dans une fosse à soufre (8), tandis que les restes des gaz sont réchauffés (9) et introduits dans un lit catalytique (10) pour la mise en oeuvre de la réaction (ii). A la sortie du lit catalytique (10), les gaz sont introduits dans un condenseur (11). Le soufre produit dans le condenseur (11) est récupéré dans la fosse à soufre (8), tandis que les restes des gaz sont réchauffés (12) et introduits dans un deuxième lit catalytique (13) pour la mise en oeuvre de la réaction (ii). A la sortie du lit catalytique (13), les gaz sont introduits dans un condenseur (14). Le soufre produit dans le condenseur (14) est récupéré dans la fosse à soufre (8). Les teneurs en sulfure d'hydrogène et dioxyde de soufre dans les gaz issus du dernier condenseur (14) sont déterminées dans un analyseur de gaz de queue (15). Ces gaz passent ensuite dans un incinérateur (16) et sont finalement rejetés à l'atmosphère par la cheminée (17).

Un analyseur de la concentration en ammoniac (18) est placé à la sortie de la chaudière (6).

Le gaz riche en oxygène (3) provient de deux sources : une source primaire (31) et une source secondaire (32). Le débit du gaz riche en oxygène issu de la source primaire (31) est contrôlé par un régulateur de débit en fonction de la mesure du débit du gaz comprenant du sulfure d'hydrogène et de l'ammoniac (1) entrant dans le four (5) (signal FF). Le débit du gaz fortement riche en oxygène issu de la source secondaire (32) est contrôlé par un régulateur de débit en fonction de la mesure de la teneur résiduelle en ammoniac réalisée par l'analyseur (18) en aval du four (5) (signal FB).

Le gaz moins riche en oxygène (4) provient de deux sources : une source primaire (41) et une source secondaire (42). Le débit du gaz moins riche en oxygène issu de la source primaire (41) est contrôlé par un régulateur de débit en fonction de la mesure du débit du gaz comprenant du sulfure d'hydrogène et pas d'ammoniac (2) entrant dans le four (5) (signal FF). Le débit du gaz moins riche en oxygène issu de la source secondaire (42) est contrôlé par un régulateur de débit en fonction de la mesure du ratio molaire H₂S/SO₂ réalisée par l'analyseur (15) dans le gaz de queue (signal FB).

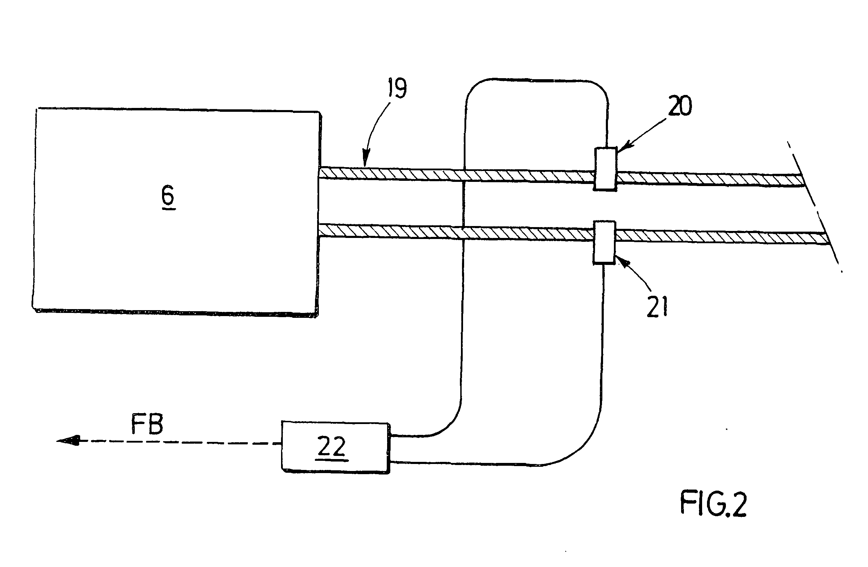

La figure 2 correspond à la mise en oeuvre de la première variante du procédé avec une diode laser pour mesurer la concentration en ammoniac. La diode laser est placée sur la conduite principale (19) du procédé en aval de la chaudière (6). Le chemin optique suivi par le rayonnement laser traverse la conduite principale du procédé car l'émetteur (20) et le récepteur (21) de la diode laser sont positionnés face à face de chaque côté de la conduite derrière des fenêtres de visée. L'émetteur (20) et le récepteur (21) sont reliés à une unité électronique (22) qui envoie un signal de contrôle en amont (FB).

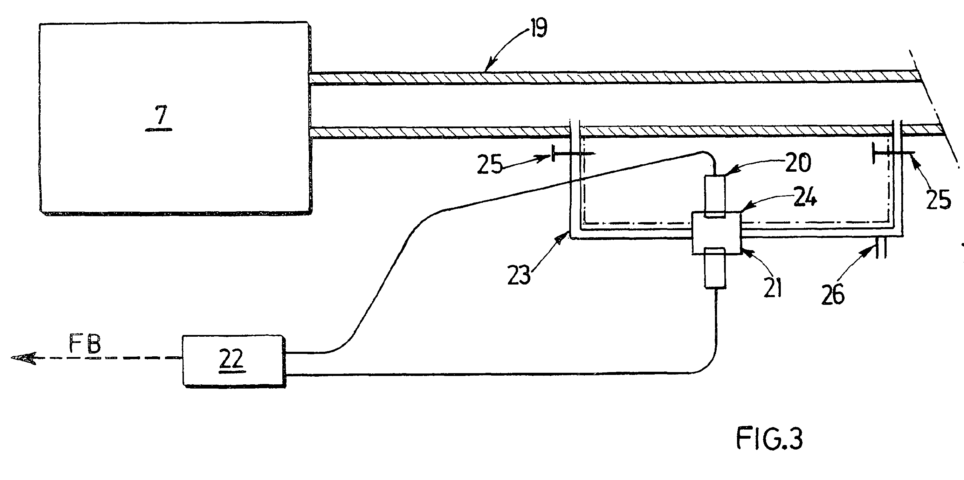

La figure 3 correspond à une mise en oeuvre de la deuxième variante du procédé avec une diode laser pour mesurer la concentration en ammoniac. Une conduite secondaire (23) est placée en dérivation de la conduite principale (19) en aval du condenseur (7). Cette conduite secondaire traverse une cellule de mesure (24) dont un côté comprend l'émetteur (20) de la diode laser et l'autre côté le récepteur (21) qui sont reliés à une unité électronique (22) laquelle envoie un signal de contrôle en amont (FB). La conduite secondaire (23) est chauffée sur toute sa longueur. Cette conduite (23) peut être éventuellement isolée par des vannes (25), par exemple pour nettoyer ou remplacer la cellule de mesure. Une ouverture (26) pour l'injection d'un gaz inerte ou de vapeur d'eau est prévue sur la conduite secondaire (23) après la cellule de mesure (24).

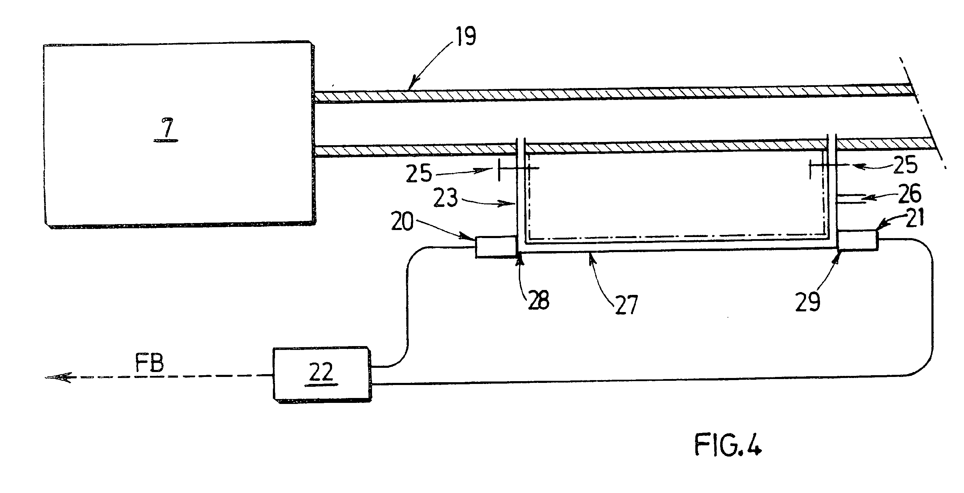

La figure 4 correspond à une mise en oeuvre de la deuxième variante du procédé avec une diode laser pour mesurer la concentration en ammoniac placée sur une conduite secondaire (23) placée en dérivation de la conduite principale (19) en aval du condenseur (7). La conduite secondaire (23) présente une portion rectiligne (27) présentant une extrémité amont (28) et une extrémité aval (29). A l'extrémité amont (28) est placé l'émetteur (20) de la diode laser et à l'extrémité aval (29) est placé le récepteur de la diode laser (21). L'émetteur (20) et le récepteur (21) sont reliés à une unité électronique (22) laquelle envoie un signal de contrôle en amont (FB). La conduite secondaire (23) est chauffée sur toute sa longueur. Cette conduite (23) peut être éventuellement isolée par des vannes (25), par exemple pour nettoyer ou remplacer la cellule de mesure. Une ouverture (26) pour l'injection d'un gaz inerte ou de vapeur d'eau est prévue sur la conduite secondaire (23) après la cellule de mesure (24).

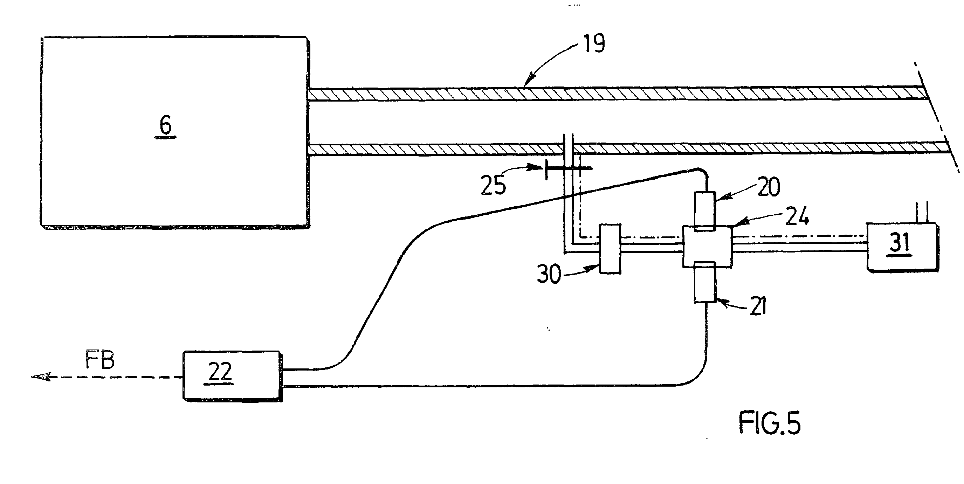

La figure 5 correspond à une mise en oeuvre de la deuxième variante du procédé avec une diode laser pour mesurer la concentration en ammoniac. Une conduite secondaire (23) est placée en dérivation de la conduite principale (19) en aval de la chaudière (6). Cette conduite secondaire traverse un piège à soufre (30), puis une cellule de mesure (24) dont un côté comprend l'émetteur (20) de la diode laser et l'autre côté le récepteur (21) qui sont reliés à une unité électronique (22) laquelle envoie un signal de contrôle en amont (FB). La conduite secondaire (23) est chauffée sur toute sa longueur. Cette conduite (23) peut être éventuellement isolée par une vanne (25), par exemple pour nettoyer ou remplacer la cellule de mesure. Après la cellule de mesure, un module de traitement (31) des gaz prélevés est placée au bout de la conduite (23) ouverte sur l'atmosphère.

### EXEMPLES

Les exemples concernent une unité Claus traitant 60 t/jour d'un gaz ammoniaqué et 100 t/j d'un gaz acide. L'unité est composée :
- d'un four Claus équipé d'un brûleur multitubes permettant l'injection séparée d'oxygène pur et d'air,
- d'une chaudière de récupération de chaleur,
- d'un premier condenseur de soufre,
- de deux étages composés chacune d'un réchauffeur indirect, d'un lit catalytique et d'un condenseur,
- d'un analyseur de gaz de queue,
- d'un incinérateur,
- d'une cheminée.

L'unité est réglée pour le traitement d'un gaz ammoniaqué de référence. Les quantités d'oxygène pur et d'air de combustion à injecter pour le traitement de ce gaz de référence sont calculées pour avoir une température dans la chambre de combustion supérieure à 1350°C correspondant au critère de destruction totale de l'ammoniac retenu pour le cas de dimensionnement du brûleur.

Les caractéristiques du fonctionnement normal de l'unité sont les suivantes :

**Tableau 1**

| | | Gaz acide | Gaz ammoniaqué | Oxygène pur | Air |
|---|---|---|---|---|---|
| Composition molaire | H₂S | 80 % | 45 % | | |
| | NH₃ | 0 | 20 % | | |
| | H₂O | 4 % | 35 % | | |
| | CO₂ | 15 % | 0 | | |
| | hydrocarbures | 1 % | 0 | | |
| Débit | | 100 t/j | 60 t/j | 23 t/j | 176 t/j |

La température mesurée au sein du four est de 1354°C et le rapport molaire H₂S/SO₂ à l'analyseur de gaz de queue est de 2. L'ammoniac est totalement éliminé.

### Exemple 1 - Modification temporaire de la teneur en ammoniac du gaz ammoniaqué

### 1.1. Résultat selon l'art antérieur

Un gaz ammoniaqué présentant une concentration en ammoniac plus élevée que celle du gaz de référence est injecté dans l'unité Claus précédente. Sa composition molaire est la suivante :
- H₂S : 40 %
- NH₃ : 25 %
- H₂O : 35 %

Les débits du gaz acide, du gaz ammoniaqué et de l'oxygène pur restent identiques à ceux du cas de référence. De manière à conserver un rapport H₂S/SO₂ à l'analyseur de gaz de queue de 2, le débit d'air est augmenté à 180 t/jour. La température mesurée au sein du four est de 1373°C assurant une destruction totale de l'ammoniac.

### 1.2. Résultat selon l'invention

On place une diode laser sur une conduite secondaire de prélèvement en aval du four Claus de l'unité précédente. Cette diode mesure en continu la concentration en ammoniac dans le gaz sortant du four Claus. Cette diode est reliée à un calculateur de l'unité qui régule en conséquence la quantité d'oxygène à injecter. Le gaz ammoniaqué présentant une concentration en ammoniac plus élevée que celle du gaz de référence est injecté dans l'unité Claus précédente.

Les débits du gaz acide et du gaz ammoniaqué restent identiques à ceux du cas de référence.

Suite aux mesures de la diode laser et de l'analyseur de gaz de queue, le calculateur régule respectivement les débits d'oxygène pur et d'air à 19 et 192 t/jour.

La température mesurée au sein du four est de 1335°C et le rapport molaire H₂S/SO₂ à l'analyseur de gaz de queue est de 2. L'ammoniac est totalement éliminé.

Par conséquent, la mise en oeuvre du procédé selon l'invention permet à la fois une élimination totale de l'ammoniac et un contrôle de la consommation en oxygène pur puisque cette dernière est réduite de 17 % entre le cas 1.1. et le cas 1.2.. L'invention a permis d'éliminer totalement l'ammoniac dans une zone chaude de la flamme à l'aide d'une quantité optimisée d'oxygène. Cette optimisation de la quantité d'oxygène injecté entraîne une température globale des gaz dans la chambre de combustion inférieure à la température de design retenue.

### Exemple 2 - Modification temporaire du débit de gaz acide

### 2.1. Résultat selon l'art antérieur

Dans l'unité Claus de référence, le débit de gaz acide passe temporairement de 100 t/jour à 83 t/jour. Toutes les autres conditions de fonctionnement restent identiques au cas de référence sauf le débit d'air qui passe à 147 t/jour par maintien du rapport H₂S/SO₂ en gaz de queue à 2.

La température mesurée au sein du four est de 1383°C, ce qui assure une destruction totale de l'ammoniac, et le rapport molaire H₂S/SO₂ à l'analyseur de gaz de queue est de 2.

### 2.2. Résultat selon l'invention

On place une diode laser sur une conduite secondaire de prélèvement en aval du four Claus. Cette diode mesure en continu la concentration en ammoniac dans le gaz sortant du four Claus. Cette diode est reliée à un calculateur de l'unité qui régule en conséquence la quantité d'oxygène à injecter. Un gaz acide présentant un débit de 83 t/jour est injecté dans l'unité Claus précédente.

Suite à la mesure de la diode laser et de l'analyseur de gaz de queue, le calculateur régule respectivement les débits d'oxygène pur et d'air à 19 et 161 t/jour.

La température mesurée au sein du four est de 1340°C et le rapport molaire H₂S/SO₂ à l'analyseur de gaz de queue est de 2. Tout l'ammoniac est éliminé.

Par conséquent, la mise en oeuvre du procédé selon l'invention permet à la fois une meilleure élimination de l'ammoniac et un contrôle de la consommation en oxygène pur puisque cette dernière est réduite de 17 % entre le cas 2.1. et le cas 2.2..

## Revendications

1. Procédé d'oxydation partielle dans un four Claus (5) d'au moins un gaz comprenant du sulfure d'hydrogène et de l'ammoniac (1), dit gaz ammoniaqué, à l'aide d'au moins un gaz riche en oxygène (3) dans lequel :
- on mesure la teneur résiduelle en ammoniac à la sortie du four Claus (5),
- on compare cette valeur à la teneur résiduelle en ammoniac désirée,
- et éventuellement on modifie le rapport du débit du gaz riche en oxygène (3) sur le débit du gaz ammoniaqué (1) de manière à obtenir la teneur résiduelle en ammoniac désirée.

2. Procédé selon la revendication 1, **caractérisé en ce que** le rapport du débit du gaz riche en oxygène (3) sur le débit du gaz ammoniaqué (1) est modifié de manière à obtenir la teneur résiduelle en ammoniac désirée pour un débit en gaz riche en oxygène (3) minimum.

3. Procédé selon la revendication 1 ou 2, **caractérisé en ce que** la teneur résiduelle en ammoniac est mesurée en continu.

4. Procédé selon l'une des revendications précédentes, **caractérisé en ce que** la teneur résiduelle en ammoniac à la sortie du four Claus (5) est mesurée par une diode laser (20, 21).

5. Procédé selon la revendication 4, **caractérisé en ce que** la diode laser (20, 21) est placée sur la conduite principale (19) du procédé en aval du four Claus (5).

6. Procédé selon la revendication 4, **caractérisé en ce que** la diode laser (20, 21) est placée sur une conduite de prélèvement (23) de gaz du procédé en aval du four Claus (5).

7. Procédé selon la revendication 6, **caractérisé en ce que** les gaz de la conduite de prélèvement (23) sont réinjectés dans la conduite principale (19).

8. Procédé selon l'une des revendications précédentes, **caractérisé en ce qu'**on modifie manuellement le rapport du débit du gaz riche en oxygène (3) sur le débit du gaz ammoniaqué (1).

9. Procédé selon l'une des revendications 1 à 7, **caractérisé en ce que** le rapport du débit du gaz riche en oxygène (3) sur le débit du gaz ammoniaqué (1) est modifié par une boucle de régulation placée entre l'appareil de mesure (18) de la teneur résiduelle en ammoniac et un automate pilotant le régulateur de débit du gaz riche en oxygène (3).

10. Procédé selon l'une des revendications précédentes, **caractérisé en ce que** le gaz riche en oxygène (3) est relié à deux sources de gaz riche en oxygène : une source primaire (31) et une source secondaire (32).

11. Procédé selon la revendication 10, **caractérisé en ce que** :
. le débit du flux de gaz (3) issu de la source primaire (31) est contrôlé par le calculateur en fonction du signal (FF) que le calculateur reçoit de la mesure du débit du gaz ammoniaqué (1) entrant dans le four et
. le débit du flux de gaz riche en oxygène (3) issu de la source secondaire (32) est contrôlé par le calculateur en fonction du signal (FB) que ce dernier reçoit de la mesure de la teneur résiduelle en ammoniac à la sortie du four.

12. Procédé selon l'une des revendications précédentes, **caractérisé en ce que** la concentration en sulfure d'hydrogène dans le gaz comprenant du sulfure d'hydrogène et de l'ammoniac (1) est comprise entre 10 et 90 % molaire.

13. Procédé selon l'une des revendications précédentes, **caractérisé en ce que** la concentration en ammoniac dans le gaz comprenant du sulfure d'hydrogène et de l'ammoniac (1) est comprise entre 10 et 60 % molaire.

14. Procédé selon l'une des revendications précédentes, **caractérisé en ce que** le gaz riche en oxygène (3) est de l'air enrichi en oxygène en une teneur supérieure à 25 % molaire, de préférence en une teneur comprise entre 40 et 100 % molaire.

15. Procédé selon l'une des revendications précédentes, **caractérisé en ce qu'**on introduit dans le four Claus un second gaz comprenant de l'oxygène (4), dit gaz moins riche en oxygène, présentant une teneur en oxygène inférieure à celle du gaz riche en oxygène (3).

16. Procédé selon l'une des revendications précédentes, **caractérisé en ce qu'**un flux de gaz comprenant du sulfure d'hydrogène et pas d'ammoniac (2), dit gaz acide, est injecté dans le four (5).

17. Procédé selon l'une des revendications précédentes, **caractérisé en ce qu'**on mélange tous les gaz avant de les injecter dans le four Claus.

18. Procédé selon l'une des revendications 1 à 16, **caractérisé en ce que** les gaz sont injectés dans le four Claus par des conduits séparés.

19. Procédé selon la revendication précédente, **caractérisé en ce que** les vecteurs vitesses d'injection dans le four des différents gaz sont sensiblement parallèles.

20. Procédé selon les revendications 15 et 18 ou 19, **caractérisé en ce que** le flux du gaz riche en oxygène (3) est entouré par un flux de gaz moins riche en oxygène (4).

21. Procédé selon l'une des revendications 16 et 17 à 20, **caractérisé en ce qu'**une partie au moins du flux de gaz acide (2) est injecté dans le four (5) de sorte qu'une partie au moins de ce flux entoure le ou les flux de gaz comprenant de l'oxygène (3, 4).

22. Procédé selon l'une des revendications 17 à 21, **caractérisé en ce qu'**une partie au moins du flux de gaz ammoniaqué (1) est entouré par une partie au moins du ou des flux de gaz comprenant de l'oxygène (3, 4).

23. Procédé selon l'une des revendications 18 à 22, **caractérisé en ce que** les flux injectés dans le four Claus (5) sont coaxiaux.

24. Procédé selon la revendication précédente, **caractérisé en ce que** l'injection des différents flux est réalisée au moyen d'un brûleur multitubes, où le tube central permet l'injection du gaz ammoniaqué (1), le premier tube intermédiaire entourant le tube central permet l'injection d'un flux de gaz riche en oxygène (3), le second tube intermédiaire entourant le premier tube intermédiaire permet l'injection du flux de gaz moins riche en oxygène (4) et le tube extérieur permet l'injection d'un flux de gaz acide (2).

## Claims

1. Process for the partial oxidation, in a Claus furnace (5), of at least one gas comprising hydrogen sulphide and ammonia (1), known as an ammonia-comprising gas, using at least one gas rich in oxygen (3), in which:
- the residual ammonia content at the outlet of the Claus furnace (5) is measured,
- this value is compared with the desired residual ammonia content,
- and, optionally, the ratio of the flow rate of the gas rich in oxygen (3) to the flow rate of the ammonia-comprising gas (1) is modified, so as to obtain the desired residual ammonia content.

2. Process according to Claim 1, **characterized in that** the ratio of the flow rate of the gas rich in oxygen (3) to the flow rate of the ammonia-comprising gas (1) is modified, so as to obtain the desired residual ammonia content for a minimum flow rate of gas rich in oxygen (3).

3. Process according to Claim 1 or 2, **characterized in that** the residual ammonia content is measured continuously.

4. Process according to one of the preceding claims, **characterized in that** the residual ammonia content at the outlet of the Claus furnace (5) is measured with a laser diode (20, 21).

5. Process according to Claim 4, **characterized in that** the laser diode (20, 21) is placed on the main pipe (19) of the process downstream of the Claus furnace (5).

6. Process according to Claim 4, **characterized in that** the laser diode (20, 21) is placed on a pipe for withdrawal (22) of gas from the process downstream of the Claus furnace (5).

7. Process according to Claim 6, **characterized in that** the gases from the withdrawal pipe (22) are reinjected into the main pipe (19).

8. Process according to one of the preceding claims, **characterized in that** the ratio of the flow rate of the gas rich in oxygen (3) to the flow rate of the ammonia-comprising gas (1) is manually modified.

9. Process according to one of Claims 1 to 7, **characterized in that** the ratio of the flow rate of the gas rich in oxygen (3) to the flow rate of the ammonia-comprising gas (1) is modified by a regulation loop placed between the device for measuring (18) the residual ammonia content and a controller which directs the flow regulator for the gas rich in oxygen (3).

10. Process according to one of the preceding claims, **characterized in that** the gas rich in oxygen (3) is connected to two sources of gas rich in oxygen: a primary source (31) and a secondary source (32).

11. Process according to Claim 10, **characterized in that**:
• the flow rate of the stream of gas (3) resulting from the primary source (31) is controlled by the calculator as a function of the signal (FF) which the calculator receives from the measurement of the flow rate of the ammonia-comprising gas (1) entering the furnace, and
• the flow rate of the stream of gas rich in oxygen (3) resulting from the secondary source (32) is controlled by the calculator as a function of the signal (FB) which the latter receives from the measurement of the residual ammonia content at the outlet of the furnace.

12. Process according to one of the preceding claims, **characterized in that** the concentration of hydrogen sulphide in the gas comprising hydrogen sulphide and ammonia (1) is between 10 and 90 molar%.

13. Process according to one of the preceding claims, **characterized in that** the concentration of ammonia in the gas comprising hydrogen sulphide and ammonia (1) is between 10 and 60 molar%.

14. Process according to one of the preceding claims, **characterized in that** the gas rich in oxygen (3) is air enriched in oxygen in a content of greater than 25 molar%, preferably in a content of between 40 and 100 molar%.

15. Process according to one of the preceding claims, **characterized in that** a second gas comprising oxygen (4), known as gas less rich in oxygen, exhibiting an oxygen content lower than that of the gas rich in oxygen (3), is introduced into the Claus furnace.

16. Process according to one of the preceding claims, **characterized in that** a stream of gas comprising hydrogen sulphide and not ammonia (2), known as sour gas, is injected into the furnace (5).

17. Process according to one of the preceding claims, **characterized in that** all the gases are mixed before being injected into the Claus furnace.

18. Process according to one of Claims 1 to 16, **characterized in that** the gases are injected into the Claus furnace via separate pipes.

19. Process according to the preceding claim, **characterized in that** the velocity vectors for injection into the furnace of the various gases are substantially parallel.

20. Process according to Claims 15 and 18 or 19, **characterized in that** the stream of the gas rich in oxygen (3) is surrounded by a stream of gas less rich in oxygen (4).

21. Process according to one of Claims 16 and 17 to 20, **characterized in that** at least a portion of the stream of sour gas (2) is injected into the furnace (5) so that at least a portion of this stream surrounds the stream or streams of gas comprising oxygen (3, 4).

22. Process according to one of Claims 17 to 21, **characterized in that** at least a portion of the stream of ammonia-comprising gas (1) is surrounded by at least a portion of the stream or streams of gas comprising oxygen (3, 4).

23. Process according to one of Claims 18 to 22, **characterized in that** the streams injected into the Claus furnace (5) are coaxial.

24. Process according to the preceding claim, **characterized in that** the injection of the various streams is carried out by means of a multitube burner, where the central tube makes possible the injection of the ammonia-comprising gas (1), the first intermediate tube surrounding the central tube makes possible the injection of a stream of gas rich in oxygen (3), the second intermediate tube surrounding the first intermediate tube makes possible the injection of the stream of gas less rich in oxygen (4) and the outer tube makes possible the injection of a stream of sour gas (2).

## Patentansprüche

1. Verfahren zur Teiloxidation mindestens eines Gases, umfassend Schwefelwasserstoff und Ammoniak (1), Ammoniakgas genannt, in einem Claus-Ofen (5) mit Hilfe mindestens eines an Sauerstoff reichen Gases (3), bei dem:
- der Restammoniakgehalt am Ausgang des Claus-Ofens (5) gemessen wird,
- dieser Wert mit dem gewünschten Restammoniakgehalt verglichen wird,
- und eventuell das Verhältnis der Menge des an Sauerstoff reichen Gases (3) zur Menge des Ammoniakgases (1) verändert wird, um den gewünschten Restammoniakgehalt zu erhalten.

2. Verfahren nach Anspruch 1, **dadurch gekennzeichnet, dass** das Verhältnis der Menge des an Sauerstoff reichen Gases (3) zur Menge des Ammoniakgases (1) verändert wird, um den gewünschten Restammoniakgehalt für eine Mindestmenge an an Sauerstoff reichem Gas (3) zu erhalten.

3. Verfahren nach Anspruch 1 oder 2, **dadurch gekennzeichnet, dass** der Restammoniakgehalt kontinuierlich gemessen wird.

4. Verfahren nach einem der vorhergehenden Ansprüche, **dadurch gekennzeichnet, dass** der Restammoniakgehalt am Ausgang des Claus-Ofens (5) durch eine Laserdiode (20, 21) gemessen wird.

5. Verfahren nach Anspruch 4, **dadurch gekennzeichnet, dass** die Laserdiode (20, 21) auf der Hauptleitung (19) des Verfahrens stromabwärts zum Claus-Ofen (5) angeordnet ist.

6. Verfahren nach Anspruch 4, **dadurch gekennzeichnet, dass** die Laserdiode (20, 21) auf einer Gasentnahmeleitung (23) des Verfahrens stromabwärts zum Claus-Ofen (5) angeordnet ist.

7. Verfahren nach Anspruch 6, **dadurch gekennzeichnet, dass** die Gase der Entnahmeleitung (23) wieder in die Hauptleitung (19) eingeleitet werden.

8. Verfahren nach einem der vorhergehenden Ansprüche, **dadurch gekennzeichnet, dass** das Verhältnis der Menge des an Sauerstoff reichen Gases (3) zur Menge des Ammoniakgases (1) manuell verändert wird.

9. Verfahren nach einem der Ansprüche 1 bis 7, **dadurch gekennzeichnet, dass** das Verhältnis der Menge des an Sauerstoff reichen Gases (3) zur Menge des Ammoniakgases (1) durch eine Regelschleife verändert wird, die zwischen dem Gerät (18) zum Messen des Restammoniakgehalts und einem Automaten angeordnet ist, der den Regler für die Menge des an Sauerstoff reichen Gases (3) steuert.

10. Verfahren nach einem der vorhergehenden Ansprüche, **dadurch gekennzeichnet, dass** das an Sauerstoff reiche Gas (3) mit zwei Quellen von an Sauerstoff reichem Gas verbinden ist: einer primären Quelle (31) und einer sekundären Quelle (32).

11. Verfahren nach Anspruch 10, **dadurch gekennzeichnet, dass**:
- die Menge des Gasflusses (3), der aus der primären Quelle (31) kommt, durch den Rechner in Abhängigkeit von dem Signal (FF) kontrolliert wird, das der Rechner von der Messung der Menge an Ammoniakgas (1), das in den Ofen eintritt, empfängt, und
- die Menge des an Sauerstoff reichen Gasflusses (3), der aus der sekundären Quelle (32) kommt, vom Rechner in Abhängigkeit von dem Signal (FB) kontrolliert wird, das dieser Letztgenannte von der Messung des Restammoniakgehalts am Ausgang des Ofens empfängt.

12. Verfahren nach einem der vorhergehenden Ansprüche, **dadurch gekennzeichnet, dass** die Konzentration an Schwefelwasserstoff in dem Gasf, umfassend Schwefelwasserstoff und Ammoniak (1), zwischen 10 und 90 Mol-% beträgt.

13. Verfahren nach einem der vorhergehenden Ansprüche, **dadurch gekennzeichnet, dass** die Ammoniakkonzentration in dem Gas, umfassend Schwefelwasserstoff und Ammoniak (1), zwischen 10 und 60 Mol-% beträgt.

14. Verfahren nach einem der vorhergehenden Ansprüche, **dadurch gekennzeichnet, dass** das an Sauerstoff reiche Gas (3) mit Sauerstoff angereicherte Luft mit einem Gehalt über 25 Mol-% ist, vorzugsweise mit einem Gehalt zwischen 40 und 100 Mol-%.

15. Verfahren nach einem der vorhergehenden Ansprüche, **dadurch gekennzeichnet, dass** in den Claus-Ofen ein zweites Gas, umfassend Sauerstoff (4), weniger an Sauerstoff reiches Gas genannt, eingeleitet wird, das einen Sauerstoffgehalt unter jenem des an Sauerstoff reichen Gases (3) aufweist.

16. Verfahren nach einem der vorhergehenden Ansprüche, **dadurch gekennzeichnet, dass** ein Gasfluss, umfassend Schwefelwasserstoff und kein Ammoniak (2), saures Gas genannt, in den Ofen (5) eingeleitet wird.

17. Verfahren nach einem der vorhergehenden Ansprüche, **dadurch gekennzeichnet, dass** alle Gase gemischt werden, bevor sie in den Claus-Ofen eingeleitet werden.

18. Verfahren nach einem der Ansprüche 1 bis 16, **dadurch gekennzeichnet, dass** die Gase in den Claus-Ofen durch getrennte Leitungen eingeleitet werden.

19. Verfahren nach dem vorhergehenden Anspruch, **dadurch gekennzeichnet, dass** die Geschwindigkeitsvektoren der Einleitung der verschiedenen Gase in den Ofen im Wesentlichen parallel sind.

20. Verfahren nach den Ansprüchen 15 und 18 oder 19, **dadurch gekennzeichnet, dass** der Fluss des an Sauerstoff reichen Gases (3) von einem Fluss an Sauerstoff weniger reichen Gases (4) umgeben ist.

21. Verfahren nach einem der Ansprüche 16 und 17 bis 20, **dadurch gekennzeichnet, dass** mindestens ein Teil des Flusses an saurem Gas (2) in den Ofen (5) eingeleitet wird, so dass mindestens ein Teil dieses Flusses den oder die Sauerstoff umfassenden Gasflüsse (3, 4) umgibt.

22. Verfahren nach einem der Ansprüche 17 bis 21,
**dadurch gekennzeichnet, dass** mindestens ein Teil des Ammoniakgasflusses (1) von mindestens einem Teil des oder der Sauerstoff umfassenden Gasflüsse (3, 4) umgeben ist.

23. Verfahren nach einem der Ansprüche 18 bis 22, **dadurch gekennzeichnet, dass** die in den Claus-Ofen (5) eingeleiteten Gasflüsse koaxial sind.

24. Verfahren nach dem vorhergehenden Anspruch, **dadurch gekennzeichnet, dass** die Einleitung der verschiedenen Flüsse mit Hilfe eines Brenners mit mehreren Rohren erfolgt, wobei das mittlere Rohr die Einleitung des Ammoniakgases (1), das erste Zwischenrohr, das das mittlere Rohr umgibt, die Einleitung eines an Sauerstoff reichen Gasflusses (3), das zweite Zwischenrohr, das das erste Zwischenrohr umgibt, die Einleitung des weniger an Sauerstoff reichen Gasflusses (4) und das äußere Rohr die Einleitung eines sauen Gasflusses (2) ermöglichen.
